# EUROPÄISCHE PATENTSCHRIFT

(11) **EP 1 179 358 B1**
(45) Veröffentlichungstag und Bekanntmachung des Hinweises auf die Patenterteilung: **17.03.2004**
(21) Anmeldenummer: 01118470.2
(22) Anmeldetag: 01.08.2001
(51) Int. Cl.: B01D 46/42, B01D 53/26, B01D 46/24, B60T 17/00

(54) **Gasführendes System mit einem Filter zur Entfeuchtung**
Gas conducting system with filter for dehumidification
Système d'écoulement de gaz avec filtre de déshumidification

(30) Priorität: 09.08.2000 DE 10039631
(43) Veröffentlichungstag der Anmeldung: 13.02.2002
(73) Patentinhaber: Mann + Hummel GmbH, 71638 Ludwigsburg (DE)
(72) Erfinder: Binder, Walter, 71522 Backnang (DE); Fischer, Christian, Dr., 70736 Fellbach (DE); Kolczyk, Markus, 74354 Besigheim (DE)
(74) Vertreter: Voth, Gerhard, Dipl.-Ing.

(56) Entgegenhaltungen:
- DE-A- 19 650 185
- GB-A- 2 055 615

## Beschreibung

### Stand der Technik

Die Erfindung betrifft ein gasführendes System, welches insbesondere als Druckluftsystem für Kraftfahrzeuge verwendet werden kann und einen Filter zur Entfeuchtung aufweist, nach der Gattung des Patentanspruches 1. Außerdem betrifft die Erfindung einen Filter der Trockenmittel enthält nach der Gattung des Patentanspruches 9.

Trockenmittel enthaltende Filter sind bekannt. Gemäß der DE 196 50 185 ist eine Wechselpatrone als Lufttrockner offenbart, welche über einen Schraubverschluss am Einbauort fixiert wird, wodurch eine Durchströmung mit dem zu trocknenden Gas ermöglicht wird. Diese als Trockenmittelbox bezeichneten Filter werden z. B. bei Bremssystemen von Lkw's und Bussen zur Entfeuchtung der Kompressorluft verwendet, um eine Korrosion und Vereisung des Bremssystems zu verhindern.

Allerdings kann es bei sehr tiefen Temperaturen und ungünstigen Betriebsbedingungen zum Einfrieren des Regelventils für den Kompressor im Bremssystem kommen. Dadurch baut sich ein unzulässig hoher Druck auf, der zu einem Versagen des Bremssystems führen kann. In diesem Fall ist das Gehäuse der Trockenmittelbox gefährdet, da dies zumeist der schwächste Teil im gasführenden System ist. Eine Explosion des Gehäuses stellt ein enormes Sicherheitsrisiko dar, wobei nicht nur die Funktion des Kraftfahrzeugs sondern auch die Gesundheit der Fahrzeuginsassen beeinträchtigt werden können.

Aufgabe der Erfindung ist es daher, einen Filter zur Entfeuchtung zu schaffen, der explosionssicher gegen unzulässig hohe Druckspitzen ist. Diese Aufgabe wird durch die Merkmale des Patentanspruches 1 sowie des Patentanspruches 9 gelöst.

### Vorteile der Erfindung

Das erfindungsgemäße gasführende System weist einen Filter mit einer Gehäusestruktur auf, wobei die Gehäusestruktur durch eine Dichtung zur Umgebung des gasführenden Systems hin abgedichtet ist. Eine Abdichtung erfolgt somit zwischen den das zu entfeuchtende gasführenden Kanalsystem enthaltenden Gehäusestrukturen und der Umgebung. Dabei kann die Gehäusestruktur ein gesondertes Gehäuse für den Filter darstellen oder integraler Bestandteil des gasführenden Systems sein. Im letzteren Fall ist z. B. eine öffenbare Gehäusestruktur zum Austausch des Trockenmittels denkbar.

Die Erfindung ist dadurch gekennzeichnet, dass die Dichtung mindestens einen geschwächten Bereich aufweist, der mit einem geringeren Grenzdruck für ein Versagen ausgestattet ist als die restliche Dichtung. Dieser geschwächte Bereich ist als Sollbruchstelle für ein gezieltes Versagen der Dichtung ausgeführt. Das Versagen der Dichtung erfolgt in einem Druckbereich, der außerhalb des normalen Betriebsbereiches des gasführenden Systems liegt jedoch unterhalb der für die Gehäusestruktur des Filters kritischen Drücke. Damit kann einem explosionsartigen Versagen der Gehäusestruktur wirksam entgegen gewirkt werden, was zu einer erhöhten Sicherheit des Bauteils führt.

Gemäß einer Weiterbildung der Erfindung kann der Filter als Wegwerf-Filter ausgeführt sein. Das Trockenmittel im Filter ist dann nicht auswechselbar. Zur Erneuerung des Trockenmittel muss der gesamte Wegwerf-Filter ausgewechselt werden. Durch die beschriebene Gestaltung als Wegwerf-Filter lassen sich besonders kostengünstige und sichere Filtersysteme gestalten. Eine andere Variante der Erfindung sieht vor, dass die Gehäusestruktur des Filters öffenbar und das Trockenmittel auswechselbar ist. Bei dieser Ausführung fällt durch den Wechsel des Trockenmittels ein möglichst geringes Maß an Abfall an. Das Gehäuse kann mehrfach verwendet werden, während nur der Einsatz mit dem Trockenmittel einer Abfallverwertung zugeführt werden muss. Hierbei ergibt sich eine besonders ökologische und bei längerem Betrieb auch ein wirtschaftliche Lösung.

Der geschwächte Bereich der Dichtung, der als Sollbruchstelle ausgeführt ist, kann gemäß einer besonderen Ausgestaltung der Erfindung durch einen verminderten Querschnitt gegenüber der restlichen Dichtung gebildet sein. Dabei ist die Geometrie der Querschnittsverminderung derart gewählt, dass bei normalen Betriebsdrücken eine Abdichtung auch an der Stelle des geschwächten Bereiches zustande kommt. Erst ein unzulässig hohes Ansteigen des Betriebsdruckes führt zu einem Versagen des geschwächten Bereiches. Eine Überschreitung des zulässigen Betriebsdruckes kann, bei geeigneter Ausbildung der Dichtung mehrere Male erfolgen. Sobald der Betriebsdruck wieder in zulässige Bereiche absinkt, wird die Dichtungsfunktion der Dichtung wieder vollständig übernommen. Alternativ zu einer Querschnittsverminderung kann der geschwächte Bereich auch durch Wahl eines anderen Dichtmaterials erzeugt werden. Der Dichtring kann dann in Zweikomponententechnik hergestellt werden.

Gemäß einer besonderen Ausgestaltung der Erfindung ist die Dichtung mit dem geschwächten Bereich zwischen der Gehäusestruktur, die das Trockenmittel enthält, und dem Einbauort am gasführenden System vorgesehen. Hierbei handelt es sich um eine Gehäusestruktur, die von dem gasführenden System entfernt werden kann. Die an dieser Stelle notwendige Dichtung kann vorteilhaft mit der beschriebenen Sollbruchstelle ausgestattet werden, ohne dass ein zusätzlicher konstruktiver Aufwand entsteht. Gleichzeitig besteht im Einbauort eine günstige Möglichkeit, den Dichtring auszuwechseln, um alterungsbedingte Funktionseinbußen zu vermeiden.

Vorteilhaft kann die Dichtung auch in einer Aufnahme im Einbauort befestigt sein. Die Dichtung verbleibt beim Abnehmen der Gehäusestruktur damit z. B. in einer Nut am Einbauort. Selbstverständlich kann die Dichtung auch an einer dafür vorgesehenen Vorrichtung an der Gehäusestruktur befestigt sein, so dass sie bei Demontage der Gehäusestruktur an dieser verbleibt.

Eine andere Möglichkeit besteht in der Anordnung der Dichtung zwischen zwei verschiedenen Gehäuseteilen der Gehäusestruktur. Sofern diese öffenbar ausgeführt ist, um das Trockenmittel auswechseln zu können, bietet sich die ohnehin notwendige Dichtung zwischen den Gehäuseteilen an, um einen geschwächten Bereich unterzubringen. Ein konstruktiver Aufwand fällt hierbei nicht an.

Eine besondere Ausgestaltung der Erfindung sieht vor, dass der geschwächte Bereich aus einem Material mit im wesentlichen konstanten Dichtungseigenschaften in einem für das gasführende System vorgesehenen Temperaturbereich hergestellt ist. Hierdurch kann ein Abblasen durch den geschwächten Bereich des Dichtrings unabhängig von der augenblicklichen Betriebstemperatur erreicht werden. Hierdurch kann z. B. ein Überdruckventil im gasführenden System eingespart werden. Dies führt zu einer erhöhten Wirtschaftlichkeit des Gesamtsystems.

Im Hinblick auf den eingangs beschriebenen Fall, bei dem die Dichtung lediglich bei einer Vereisung des Überdruckventils zum Einsatz kommen muss, sind die Anforderungen an die konstanten Dichtungseigenschaften geringer. Der Grenzdruck eines Undicht werdens muss lediglich im vereisungsgefährdeten Temperaturbereich gewährleistet sein, sofern bei steigenden Temperaturen dieser Druck ansteigt. Bei höheren Temperaturen ist die Funktion des Überdruckventils gewährleistet, so dass ein Öffnen des geschwächten Bereichs des Dichtrings nicht erforderlich ist.

Erfindungsgemäß ist weiterhin ein Filter mit einer Gehäusestruktur beschrieben, der eine Dichtung mit den bereits ausgeführten Eigenschaften aufweist, welche die Gehäusestruktur zur Umgebung hin abdichtet. Dieser Filter ist insbesondere in ein Gas führendes System der beschriebenen Art einsetzbar.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: den erfindungsgemäßen Filter, dargestellt im teilweisen Mittelschnitt,
- Figur 2: eine alternative Ausgestaltung des Filters, wobei die Gehäusestruktur an das Gas führende System angeschraubt ist,
- Figur 3: einen Dichtring mit zwei geschwächten Bereichen als Aufsicht,
- Figur 4: den Schnitt A-A gemäß Figur 3,
- Figur 5: ein alternatives Profil für den geschwächten Bereich,
- Figur 6: ein weiteres Profil für den geschwächten Bereich und
- Figur 7: verschiedene Druckverläufe über der Zeit bei Verwendung des Dichtrings mit geschwächtem Bereich.

### Beschreibung der Ausführungsbeispiele

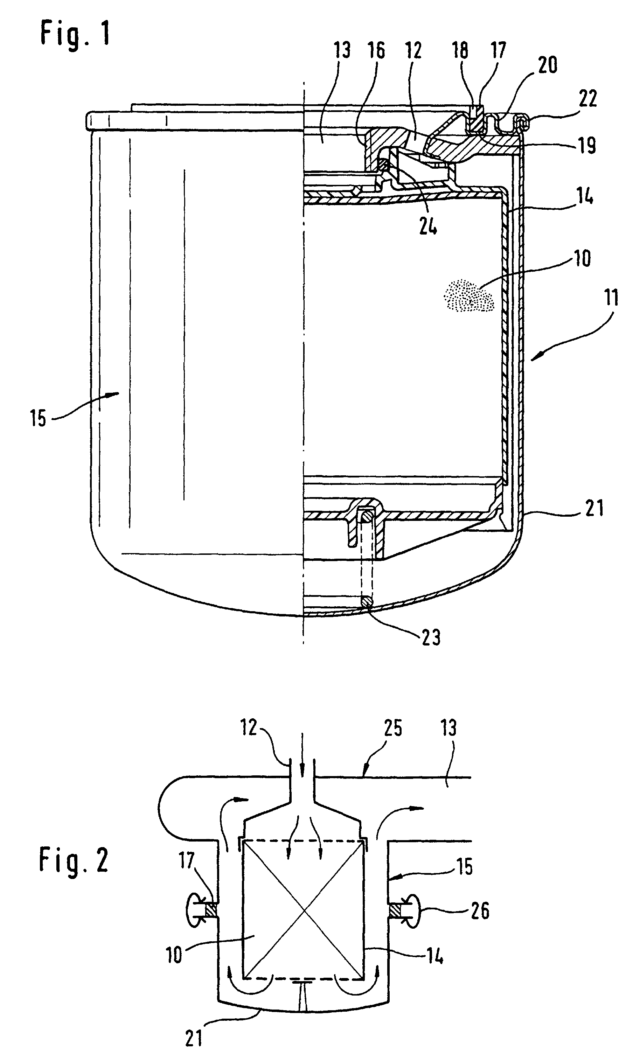

In Figur 1 ist ein mit einem Trockenmittel 10 gefüllter Filter 11 dargestellt. Der Filter besitzt einen Einlass 12 und einen Auslass 13. Das Trockenmittel ist in einen Filtereinsatz 14 eingebracht, welcher dichtend in einer Gehäusestruktur 15 befestigt ist.

Der Filter ist als Wegwerffilter ausgeführt. Der Filtereinsatz mit dem Trockenmittel 10 lässt sich nicht auswechseln. Der Filter wird mit einem zentralen Gewinde 16 am Einbauort der gasführenden Struktur (nicht dargestellt), z. B. dem Druckluftbremssystem eines Lkw, angeschraubt. Eine Abdichtung zwischen Filter 11 und dem Einbauort kommt durch eine Dichtung 17 zustande, die mit einem geschwächten Bereich 18 versehen ist. Dieser besteht aus einer Aussparung im Profil des Dichtrings, wobei eine Abdichtung bei Drücken innerhalb des Betriebsbereiches des Filters durch den Dichtring gewährleistet ist. Der geschwächte Bereich versagt erst bei einem unzulässigen Ansteigen des Dichtdruckes, da die Dichtung im geschwächten Bereich dem Druck einen geringeren Widerstand entgegensetzt, als im restlichen Bereich. Durch Modifikation des geschwächten Bereiches kann ein Abblasen von Überdruck durch den Dichtring genau eingestellt werden. Durch entsprechende Gestaltung des geschwächten Bereiches kann auch bei Vorliegen von Toleranzen im Dichtbereich eine relativ genaue Einhaltung des Abblasdruckes eingehalten werden.

Der Dichtring ist in einer Nut 19 untergebracht, wobei die Nut in eine Abdeckplatte 20 integriert ist. Die Abdeckplatte ist mit einem Gehäusetopf 21 durch einen Bördel 22 fest verbunden. Alternativ (nicht dargestellt) kann der Dichtring auch in einer Nut im Einbauort befestigt sein. In diesem Fall würde das Gehäuse anstelle der Nut eine Abflachung aufweisen, die als Gegenfläche für den Dichtring notwendig ist. Weitere Bauteile des Filters sind eine Feder 23 und ein O- Ring 24, die für eine Fixierung des Filtereinsatzes im Gehäuse und eine Abdichtung von Rohseite und Reinseite des Filtereinsatzes dienen.

In Figur 2 ist schematisch ein Gas führendes System 25 als Ausschnitt dargestellt. Teil des gasführenden Systems ist die eine Hälfte der Gehäusestruktur 15, die zur Komplettierung mit dem Gehäusetopf 21 versehen ist. Angedeutet ist weiterhin der Filtereinsatz 14, der von der Gehäusestruktur gehalten wird. Die Durchströmung des gasführenden Systems 25 und des Filters ist durch Pfeile angedeutet.

Der Dichtring 17 mit dem geschwächten Bereich (nicht dargestellt) dient in diesem Ausführungsbeispiel als Abdichtung zwischen den einzelnen Gehäuseteilen. Diese werden durch Montageklammern 26 zusammengehalten, wodurch gleichzeitig der Dichtdruck an der Dichtung 17 erzeugt wird. Durch Entfernen der Montageklammern lässt sich der Filtereinsatz 14 auswechseln, sobald dies durch Alterung des Trockenmittels 10 notwendig wird.

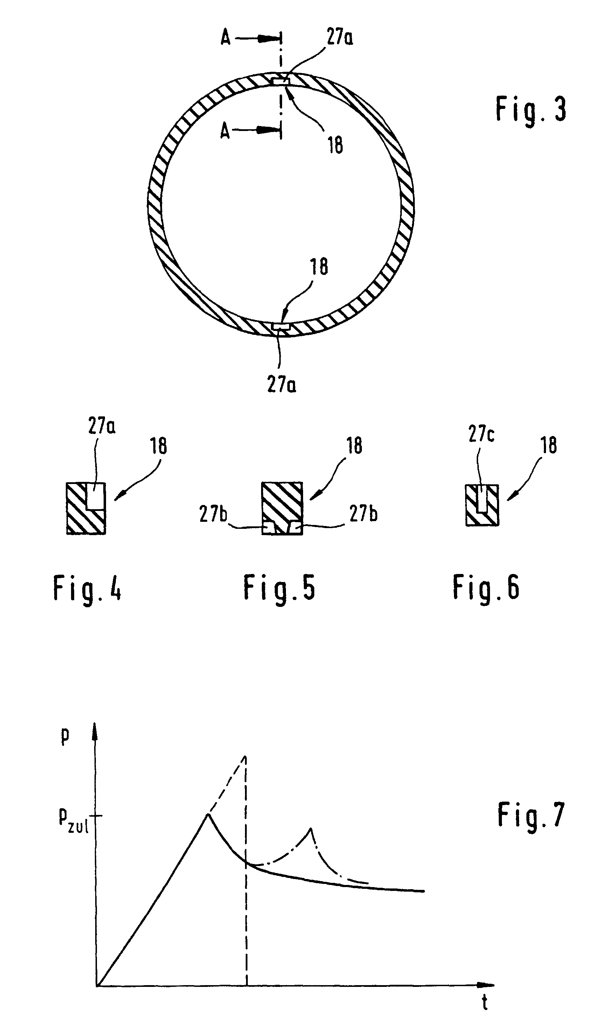

Ein Beispiel für die Ausgestaltung der Dichtung 17 ist Figur 3 zu entnehmen. Diese weist an sich gegenüberliegenden Stellen zwei Aussparungen 27a auf, welche als geschwächte Bereiche18 dienen.

Das Profil der Dichtung ist in Figur 4 zu erkennen. Dieses ist im wesentlichen rechteckig ausgeführt, wobei nur im geschwächten Bereich 18 die rechteckige Aussparung 27a angebracht ist. Alternativ können die Aussparungen 27b auch beidseitig des Dichtrings angebracht werden (Fig. 5). Eine andere Variante ist eine U- förmige Ausführung des Dichtungsprofils im geschwächten Bereich 18 durch eine entsprechende Aussparung 27c.

Figur 7 stellt einen typischen Druckverlauf der beschriebenen Dichtungen bei Anwendung in einer Trockenmittelbox für das Bremssystem eines Lkw dar. In dem Diagramm ist der Druckverlauf p über der Zeit t dargestellt. Steigt der Druck über einen bestimmten Wert p _{zul} an, so versagt der geschwächte Bereich, so dass es zu einem Druckabfall kommt (durchgezogene Linie). Dieser Vorgang ist wiederholbar, wobei durch eine Ermüdung des geschwächten Bereiches sich mit der Zeit ein etwas geringerer Öffnungsdruck einstellen kann (strich punktierte Kurve). Zuletzt ist der Druckverlauf über einem gewöhnlichen Dichtring gemäß dem Standes der Technik eingezeichnet, welcher zu einem schlagartigen Druckabfall durch Explosion der Gehäusestruktur führen würde (gestrichelte Kurve).

## Patentansprüche

1. Gasführendes System, insbesondere Druckluftsystem für ein Kraftfahrzeug, welches einen Filter zur Entfeuchtung aufweist, wobei der Filter mit einem Trockenmittel (10) ausgestattet ist, welches in eine Gehäusestruktur (15) mit einem Einlass (12) und einem Auslass (13) für das Gas durchströmbar angeordnet ist, wobei die Gehäusestruktur (15) eine Dichtung (17) zur Umgebung des gasführenden Systems aufweist, **dadurch gekennzeichnet, dass** die Dichtung mindestens einen geschwächten Bereich (18) aufweist, der mit einem geringeren Grenzdruck für ein Versagen ausgestattet ist, als die restliche Dichtung.

2. Gasführendes System nach Anspruch 1, **dadurch gekennzeichnet, dass** der Filter als Wegwerffilter ausgeführt ist, in dem das Trockenmittel nicht auswechselbar ist.

3. Gasführendes System nach Anspruch 1, **dadurch gekennzeichnet, dass** die Gehäusestruktur des Filters öffenbar und das Trockenmittel auswechselbar ist.

4. Gasführendes System nach einem der vorherigen Ansprüche, **dadurch gekennzeichnet, dass** der geschwächte Bereich (18) der Dichtung (17) durch einen verminderten Querschnitt gegenüber der restlichen Dichtung gebildet ist.

5. Gasführendes System nach einem der vorherigen Ansprüche, **dadurch gekennzeichnet, dass** die Dichtung (17) mit dem geschwächten Bereich (18) zwischen der Gehäusestruktur (15) und einem Einbauort für den Filter an dem gasführenden System vorgesehen ist.

6. Gasführendes System nach Anspruch 5, **dadurch gekennzeichnet, dass** die Dichtung (17) in einer Aufnahme am Einbauort befestigt ist.

7. Gasführendes System nach einem der vorherigen Ansprüche, **dadurch gekennzeichnet, dass** die Dichtung (17) mit dem geschwächten Bereich (18) zwischen zwei Gehäuseteilen der Gehäusestruktur (15) vorgesehen ist.

8. Gasführendes System nach einem der vorherigen Ansprüche, **dadurch gekennzeichnet, dass** die Dichtung (17) mit dem geschwächten Bereich aus einem Material mit im wesentlichen konstanten Dichtungseigenschaften in einem für das gasführende System vorgesehenen Temperaturbereich hergestellt ist.

9. Filter mit einem in einer Gehäusestruktur (15) angeordneten Trockenmittel (10), der eine Dichtung zur Umgebung der Gehäusestruktur hin aufweist, **dadurch gekennzeichnet, dass** die Dichtung mindestens einen geschwächten Bereich (18) aufweist, der mit einem geringeren Grenzdruck für ein Versagen ausgestattet ist, als die restliche Dichtung.

10. Filter nach Anspruch 9, **dadurch gekennzeichnet, dass** dieser in ein gasführendes System gemäß einem der Ansprüche 1 bis 8 einbaubar ist.

## Claims

1. Gas-conducting system, more especially compressed air system for an automotive vehicle, said system having a filter for removing moisture, the filter being provided with a desiccant (10), and said system having an Inlet (12) and an outlet (13) disposed so that the gas can flow through into a housing structure (15), the housing structure (15) having a sealing means (17) for sealing the housing relative to the surrounding environment of the gas-conducting system, **characterised in that** the sealing means has at least one weakened region (18), which is provided with a pressure limit for failure which is lower than that of the remaining sealing means.

2. Gas-conducting system according to claim 1, **characterised in that** the filter is in the form of a disposable filter, in which the desiccant is not replaceable.

3. Gas-conducting system according to claim 1, **characterised in that** the housing structure of the filter is openable and the desiccant is replaceable.

4. Gas-conducting system according to one of the previous claims, **characterised in that** the weakened region (18) of the sealing means (17) is formed by a cross-section which is reduced compared to that of the remaining sealing means.

5. Gas-conducting system according to one of the previous claims, **characterised in that** the sealing means (17) is provided with the weakened region (18) between the housing structure (15) and a mounting location for the filter in the gas-conducting system.

6. Gas-conducting system according to claim 5, **characterised in that** the sealing means (17) is secured in a receiving means at the mounting location.

7. Gas-conducting system according to one of the previous claims, **characterised in that** the sealing means (17) is provided with the weakened region (18) between two housing portions of the housing structure (15).

8. Gas-conducting system according to one of the previous claims, **characterised in that** the sealing means (17) with the weakened region (18) is produced from a material with sealing characteristics which are substantially constant in a temperature range which is provided for the gas-conducting system.

9. Filter having a desiccant (10), which is disposed in a housing structure (15) and has a sealing means for sealing relative to the surrounding environment of the housing structure, **characterised in that** the sealing means has at least one weakened region (18), which is provided with a pressure limit for failure which is lower that of the remaining sealing means.

10. Filter according to claim 9, **characterised In that** this filter is installable into a gas-conducting system in accordance with claims 1 to 8.

## Revendications

1. Système d'écoulement de gaz, en particulier système à air comprimé pour un véhicule automobile, présentant un filtre de déshumidification, dans lequel le filtre est équipé d'un dessiccateur (10) disposé de façon à pouvoir être traversé dans une structure de boîtier (15) comportant une entrée (12) et une sortie (13) pour le gaz, la structure de boîtier (15) présentant un joint (17) entourant le système d'écoulement de gaz,
**caractérisé en ce que**
le joint présente au moins une zone de faiblesse (18) ayant une pression limite plus faible que le reste du joint, afin de permettre une rupture.

2. Système d'écoulement de gaz selon la revendication 1,
**caractérisé en ce que**
le filtre est configuré sous la forme d'un filtre jetable dans lequel le dessiccateur ne peut pas être remplacé.

3. Système d'écoulement de gaz selon la revendication 1,
**caractérisé en ce que**
la structure de boîtier du filtre peut être ouverte et le dessiccateur peut être remplacé.

4. Système d'écoulement de gaz selon l'une quelconque des revendications précédentes,
**caractérisé en ce que**
la zone de faiblesse (18) du joint (17) est formée par une section transversale réduite par rapport au reste du joint.

5. Système d'écoulement de gaz selon l'une quelconque des revendications précédentes,
**caractérisé en ce que**
le joint (17) comportant la zone de faiblesse (18) est prévu entre la structure de boîtier (15) et un emplacement de montage pour le filtre sur le système d'écoulement de gaz.

6. Système d'écoulement de gaz selon la revendication 5,
**caractérisé en ce que**
le joint (17) est fixé dans un renfoncement au niveau de l'emplacement de montage.

7. Système d'écoulement de gaz selon l'une quelconque des revendications précédentes,
**caractérisé en ce que**
le joint (17) comportant la zone de faiblesse (18) est prévu entre deux parties de boîtier de la structure de boîtier (15).

8. Système d'écoulement de gaz selon l'une quelconque des revendications précédentes,
**caractérisé en ce que**
le joint (17) comportant la zone de faiblesse est fabriqué à partir d'un matériau ayant des propriétés isolantes pour l'essentiel constantes, dans une plage de températures prévue pour le système d'écoulement de gaz.

9. Filtre comportant un dessiccateur (10) disposé dans une structure de boîtier (15), présentant un joint entourant la structure de boîtier,
**caractérisé en ce que**
le joint présente au moins une zone de faiblesse (18) ayant une pression limite plus faible que le reste du joint, afin de permettre une rupture.

10. Filtre selon la revendication 9,
**caractérisé en ce que**
ce dernier peut être monté dans un système d'écoulement de gaz selon l'une quelconque des revendications 1 à 8.
